(19)

Europäisches
Patentamt
European
Patent Office
Office européen
des brevets

(11) **EP 2 348 651 A1**

(12) **EUROPEAN PATENT APPLICATION**

(43) Date of publication:
**27.07.2011 Bulletin 2011/30**

(51) Int Cl.:
*H04B 10/148* (2006.01)  *H04B 10/17* (2006.01)
*H04B 10/158* (2006.01)  *H04J 14/02* (2006.01)

(21) Application number: **11151215.8**

(22) Date of filing: **18.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.01.2010 FR 1000182**

(71) Applicant: **Alcatel Lucent
75007 Paris (FR)**

(72) Inventors:
• **Bertran Pardo, Oriol
91620, NOZAY (FR)**
• **Salsi, Massimiliano
91620, NOZAY (FR)**

(74) Representative: **Keseris, Denis
ALCATEL LUCENT
Bâtiment Bourgognes
32 avenue Kléber
92707 Colombes Cedex (FR)**

(54) **Method for retrieving a signal**

(57)    The present invention pertains to a method for retrieving at least one optical signal transmitted over a communication network by a transmission channel, said method using coherent detection and comprising the following steps:
- a coherent mixing of at least one transmitted optical signal and a baseline signal emitted by at least one frequency-tunable local oscillator,
- a sampling of the signals derived from the coherent mixing, comprising an analog-digital conversion,
- a digital signal processing,

wherein the digital signal processing comprises a spectrum analysis function.

Fig.1

EP 2 348 651 A1

**Description**

The present invention pertains to the field of communication networks, and in particular to the retrieval of signals after transmission, based on coherent detection.

In order to meet users' growing demand, operators must find solutions to enable communication networks to handle the increase in traffic.

The use of multi-level modulation formats combined with coherent detection constitutes a very promising solution. This is because coherent detection affords a high degree of sensitivity and makes it possible to add benefits related to digital signal processing to improve demodulation.

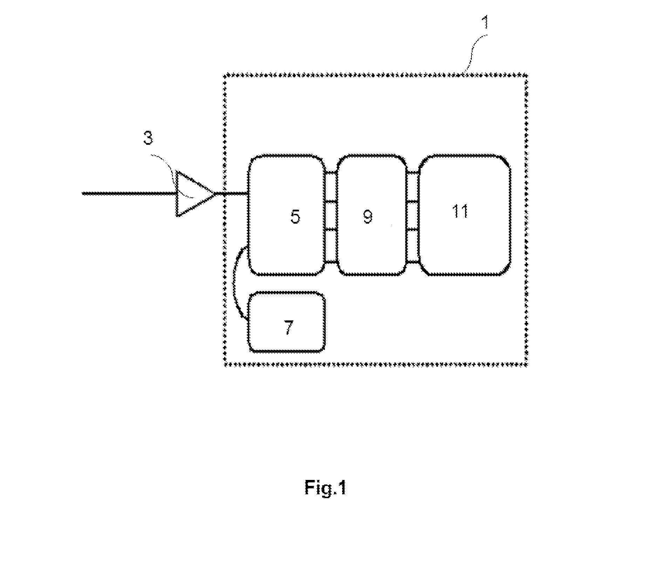

Figure 1 depicts an example coherent detection optical receiver 1. The signal transmitted by the network is amplified beforehand by an optical amplifier 3 and then transmitted to a coherent mixer 5. Said coherent mixer is also fed by a baseline signal transmitted by a tunable local oscillator 7. The signals derived from the coherent mixer 5 are then detected by photodiodes and transmitted to a sampler 9 comprising analog and digital converters, then are demodulated by a digital signal processing device 11.

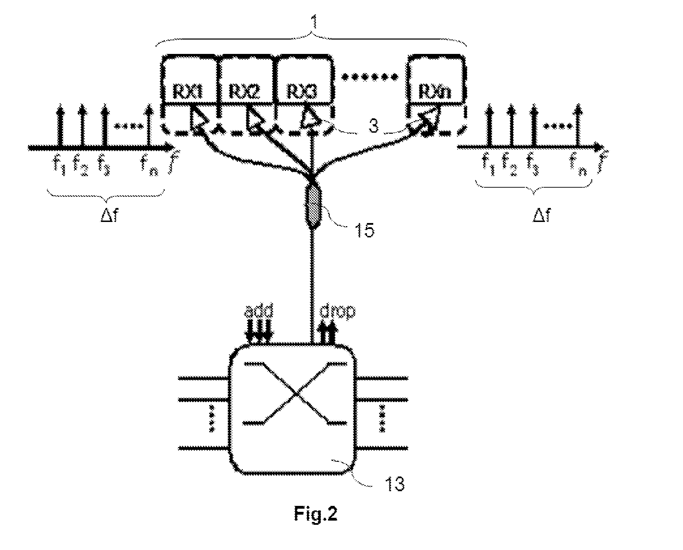

Furthermore, it has recently been shown that the selectivity afforded by a tunable local oscillator, and the filtering carried out by photodiodes and analog-digital converters, make it possible to bypass the use of channel selection filters at the input of the signal retrieval device, particularly for colorless networks, i.e. when the signals corresponding to multiple channels are transmitted to different receivers, which makes it possible to increase flexibility while reducing the cost of the equipment. An example configuration of a colorless network's reception device is depicted in Figure 2. The optical signals transmitted by the network are routed to the receivers 1 of their egress nodes by an optical cross-connect 13 (OXC) generally comprising wavelength selective switches (WSSs). All of the signals are then transmitted (in frequency band) to all the optical receivers 1 by means of an optical coupler 15.

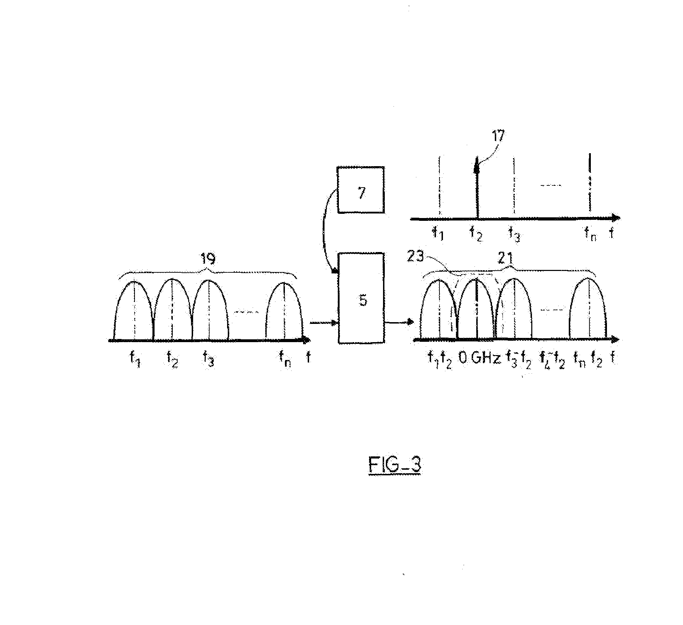

Within the receiver, as depicted in Figure 3, the tunable local oscillator will emit a signal at the frequency f2 corresponding to the frequency of the channel on which the signal to be retrieved was transmitted. The interaction within the coherent mixer 5 of the baseline signal 17 with frequency f2 emitted by the tunable local receiver and the transmitted signal 19 will produce a signal 21 comprising a baseband signal corresponding to the signal of the channel with frequency f2 and obtained by a beat with the baseline signal 17, this baseband signal then being filtered by the bandwidth 23 of the analog-digital converters.

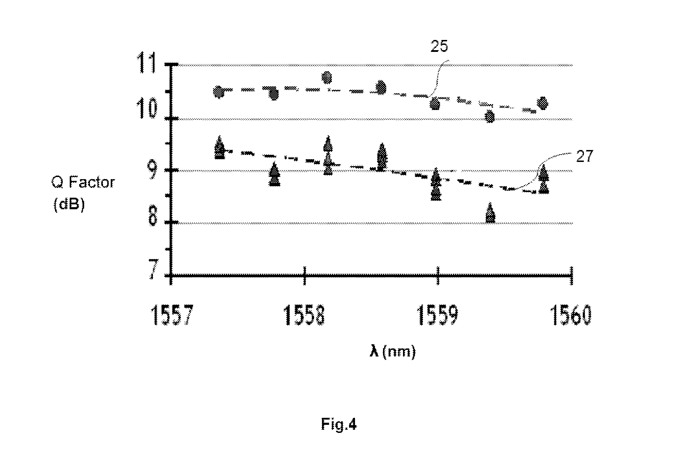

Nonetheless, the absence of filtering at the input may lead to degradation in performance when retrieving signals. Figure 4 depicts a comparison of the Q factor between an optical receiver 1 comprising a filter (signal 25) and an optical receiver 1 without a filter (signal 27) receiving signals from eight channels.

This degradation in performance particularly appears if the wavelength of the tunable local oscillator is too different from the wavelength of the transmitted signal, if the filtering is not accurate enough (retrieving undesired signals) or if the following condition concerning equilibrium between the channels' powers is not met:

$$\left| A_{LO} * A_{sel\_ch} \right|^2 > \sum_{ch=1}^{N} \left| A_{ch} \right|^2$$

where $A_{LO}$ is the power of the local oscillator, $A_{sel\_ch}$ is the power of the selected channel, and $A_{ch}$ is the power of one channel.

This power condition is not met, for example, whenever the frequency gain curve is titled and/or the power of some channels is very different from those of other channels.

Additionally, the aforementioned degradations are not detected by the equipment of the prior art and are therefore not corrected.

The goal of the present invention is therefore to overcome the aforementioned drawbacks of the prior art and to propose a method for retrieving a signal improving the overall signal-retrieval performance without affecting the overall cost of the equipment.

Thus, the present invention pertains to a method for retrieving at least one optical signal transmitted over a communication network by a transmission channel, said method using coherent detection and comprising the following steps:

- a coherent mixing of at least one transmitted optical signal and a baseline signal emitted by at least one frequency-tunable local oscillator,
- a sampling of the signals derived from the coherent mixing, comprising an analog-digital conversion,
- a digital signal processing,

wherein the digital signal processing comprises a spectrum analysis function, and wherein the spectral analysis is conducted on a set of signals corresponding to a plurality of transmission channels.

According to another aspect of the present invention, the step of digital signal processing comprises a chromatic dispersion compensation function using a finite impulse response filter, and wherein the spectral analysis makes it possible to determine the finite impulse response filter's transfer function in order to refine the filtering of the signal.

According to one additional aspect of the present invention, said method comprises a preliminary step of optical amplification, wherein the spectral analysis makes it possible to correct and/or refine said optical amplification's gain curve.

According to one additional aspect of the present invention, said method comprises a preliminary step of selecting at least one transmission channel of the network carried out by at least one wavelength selective switch, and wherein the spectral analysis makes it possible to determine the filtering function of said at least one wavelength selective switch in order to adjust the attenuation corresponding to said at least one transmission channel.

According to another aspect of the present invention, the spectral analysis makes it possible to determine the wavelength of the transmission channel(s) over which the optical signal(s) is/are being transmitted, and consequently to determine the wavelength to which the tunable local oscillator(s) must tune.

According to an additional aspect of the present invention, the spectral analysis is conducted via the tunable local oscillator scanning the frequency spectrum corresponding to the spectral range of the analyzed set of signals.

According to another aspect of the present invention, the spectral analysis comprises the following steps:

- a scan of the frequencies by the tunable local oscillator;
- a reconstruction of the spectrum;
- an analysis of the wavelength division multiplexing;
- an estimate of the tilt of the optical amplification;
- a determination of the power tilt between the various transmission channels;
- a determination of the frequency of the transmission channels;
- an estimate of the bandwidth of the various channels.

According to an additional aspect of the present invention,

- the gain of at least one optical amplifier is corrected based on the estimate of the tilt of the optical amplification;
- the settings of the wavelength selective switch(es) are modified as a function of the power tilt between the various transmission channels;
- the tunable local oscillator(s) is/are tuned as a function of the determination of the frequency of the transmission channels.

According to another aspect of the present invention, the spectral analysis is conducted whenever an optical signal's retrieval device does not retrieve the signal transmitted over a communication network.

The present invention also pertains to a device for retrieving at least one optical signal transmitted over a communication network, said device comprising:

- a coherent mixer connected to a frequency-tunable local oscillator,
- a sampler comprising analog-digital conversion means,
- a digital signal processing device,

wherein the digital signal processing device comprises a spectral analysis function.

According to another aspect of the present invention, the digital signal processing device comprises a chromatic dispersion compensation function using a finite impulse response filter and means for determining the transfer function of said finite impulse response filter based on the result of the spectral analysis.

According to an additional aspect of the present invention, said device comprises at least one optical amplifier and means for adjusting the gain curve of said optical amplifier(s) based on the result of the spectral analysis.

According to an additional aspect of the present invention, said device comprises at least one wavelength selective switch in order to select at least one transmission channel and wherein said device comprises means for adjusting the filtering function of said wavelength selective switch(es).

According to another aspect of the present invention, said device comprises means for tuning the tunable local oscillator(s) based on the result of the spectral analysis.

According to an additional aspect of the present invention, the retrieval device comprises a plurality of means for retrieving signals transmitted over a plurality of channels, the spectral analysis being conducted by one of these means of retrieval and making it possible to adjust the parameters of the plurality of means of retrieval.

Other characteristics and benefits of the invention will become apparent from the following description, given with reference to the attached drawings, which by way of a non-limiting example depict one possible embodiment.

In these drawings:

- Figure **1** depicts a diagram of an optical receiver using coherent detection;
- Figure **2** detects a diagram of the transmission of optical signals to the optical receivers within an egress node;

- Figure **3** depicts a diagram representative of a coherent mixing;
- Figure **4** depicts a diagram showing the Q factor as a function of wavelength;
- Figure **5** depicts a diagram of the various digital processing functions according to the prior art;
- Figure **6** depicts a diagram of a frequency scan;
- Figure **7** depicts a filtering carried out by the bandwidth of an analog-digital converter;
- Figure **8** depicts the modulus and phase of a finite impulse response filter used to compensate for chromatic dispersion within the prior art;

- Figure **9** depicts the modulus and phase of a finite impulse response filter used to compensate for chromatic dispersion according to the present invention;
- Figure **10** depicts the results of the possible reconstruction of the signal according to the prior art (a) and according to the present invention (b) on a transmitted signal.
- Figure **11** depicts an example representation of the power levels of the various channels in the absence of spectral analysis control;
- Figure **12** depicts a diagram of feedback used to adjust the mitigation of optical wavelength selective switches;
- Figure **13** depicts an example representation of the power levels of the various channels in the presence of spectral analysis control;
- Figure **14** depicts an example tilt of optical amplification in the absence of spectral analysis control;
- Figure **15** depicts a diagram of feedback used to adjust the gain of the optical amplifiers;
- Figure **16** depicts an example power distribution in the presence of spectral analysis control;
- Figure **17** depicts an example implementation of a spectral analysis function within signal processing related to the retrieval of a signal within an optical receiver and interactions with the relevant devices;
- Figure **18** depicts a schematic diagram of the various steps of the spectral analysis according to the embodiments of the present invention.

The embodiments of the present invention pertain to an optical signal retrieval method within a colorless network within which a spectral analysis function is used in order to improve the quality of the retrieval.

The digital signal processing device 11 comprises various functions making it possible to retrieve the signal.

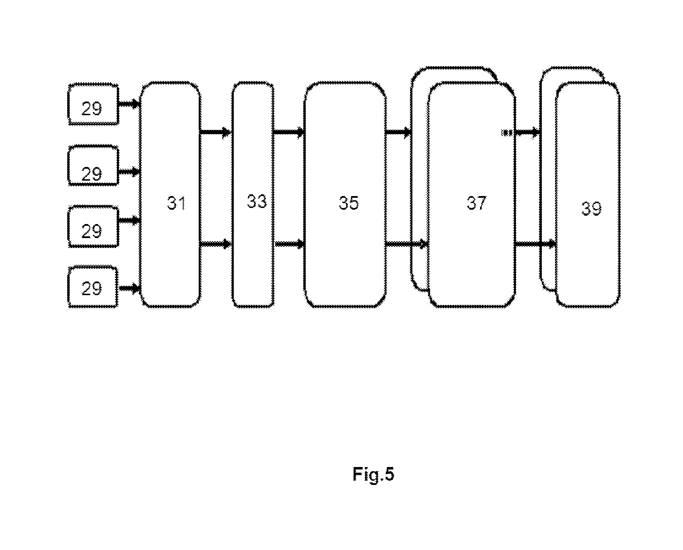

An example organization of these functions is presented in Figure 5. At the output of the digital analog converters 29 of the sampler 9, the signal processing comprises a signal reconstruction module 31 and then a chromatic dispersion compensation module 33. The signals are then processed by a polarization and equalization demultiplexing module 35 before being transmitted to a carrier frequency and phase retrieval module 37 and finally to a symbol identification module 39.

It should be noted that these modules generally correspond to the functions of a single digital signal processing device.

Adding a spectral analysis module (or function) makes it possible to extract more information from the received signals and thereby to adjust to the settings of some parameters influencing the retrieval in order to improve the overall performance of the signal's retrieval, and therefore the signal quality obtained as the outcome of digital processing.

The spectral analysis consists of analyzing the signals over the entirety of their spectral range. As previously described, in colorless networks, the signals corresponding to a plurality of channels are transmitted to each receiver 1. The entirety of these channels correspond to a certain spectral width $\Delta f$.

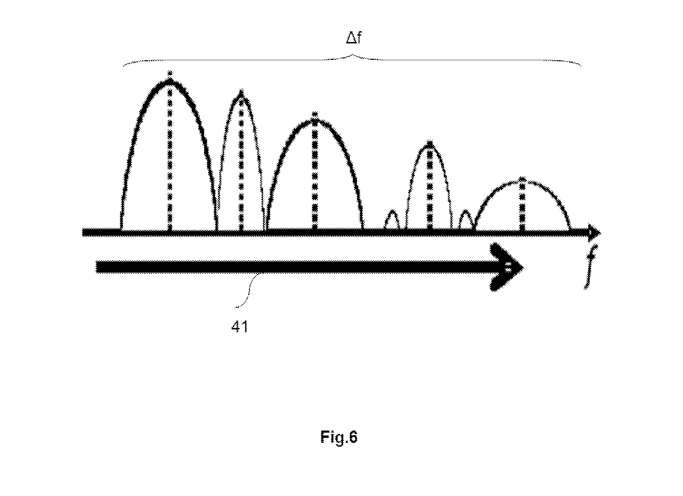

In order to analyze all of the received signals, the optical receiver carries out frequency scanning on the spectral width $\Delta f$. This scan is performed by the local oscillator 7. It should be noted that with the use of a quickly tunable laser source, the time needed for such a scan is reduced. Thus, the spectral analyzer may use the information contained within the entirety of the spectral band $\Delta f$ corresponding to the frequency scan 41 as depicted in Figure 6.

This spectral analysis makes it possible to obtain different information about the receive signals, and particularly:

- the frequency and bandwidth of the transmission channels,
- the power of the various transmission channels, or
- the tilt of the optical amplification.

The benefit of knowing the frequency and bandwidth of transmission channels is not only being able to adjust the tuning frequency of the local oscillator 7, but also to refine the filtering of the signal within the spectral band corresponding to the channel.

This is because, with respect to the tuning frequency of the local oscillator 7, in the prior art, this frequency is transmitted to the optical receiver by a control plane. The spectral analysis therefore makes it possible to more accurately determine this frequency directly within the optical receiver.

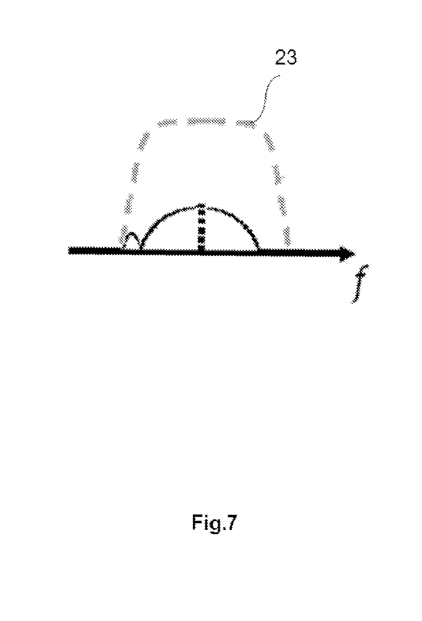

Furthermore, as previously described, the spectral width selectivity of the retrieved signal is defined by the bandwidth 23 of the analog-digital converters 23 depicted in Figure 7 and which make it possible to retrieve the baseband signal contained within that bandwidth. However, as this bandwidth is fixed, a portion of the signals corresponding to the adjacent channels may be located within that bandwidth 23 and contribute to a degradation in the quality of the signal at the output of the optical receiver 1.

However, owing to the spectral analysis, the width of the spectral band corresponding to one channel may be accurately determined.

Furthermore, within a chromatic dispersion compensation module, a finite impulse response (FIR) filter is used to carry out the compensation.

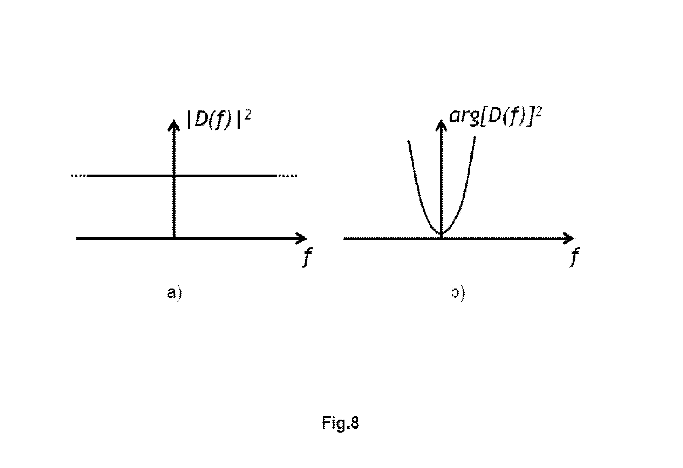

Figure 8 depicts the modulus (a) and phase (b) of the finite impulse response filter.

Given that chromatic dispersion only affects the signal's phase, the filter's modulus is a constant function.

The information obtained from the spectral analysis may therefore be used to define a more optimal transfer function of the modulus of the finite impulse response filter based on the spectral width of the processed signal. The application of parameters obtained from the spectral analysis on the filter's modulus thereby makes it possible to obtain custom filtering of the signal without increasing the complexity of the digital processing.

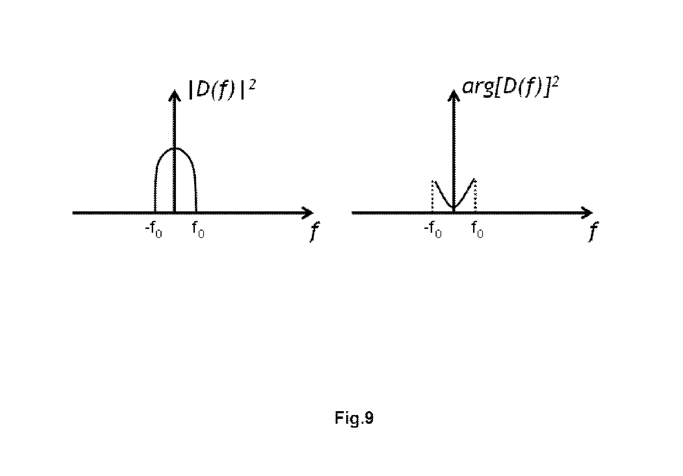

In the event that the channel in question has a special width corresponding to a range $[-f_0;f_0]$, the transfer function of the chromatic dispersion filter will be adjusted accordingly as depicted in Figure 9.

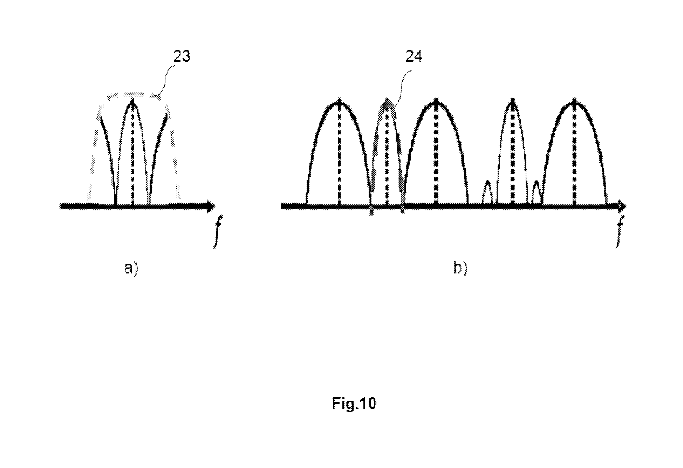

Consequently, instead of obtaining a rough filter via bandwidth 29 as depicted in the left-hand side (a) of Figure 10, the spectral analysis and the adjustment of the chromatic dispersion filter's modulus based on the information provided by the spectral analysis make it possible to obtain an accurate filter 24 adjusted to the signal corresponding to the channel in question as depicted in the right-hand side (b).

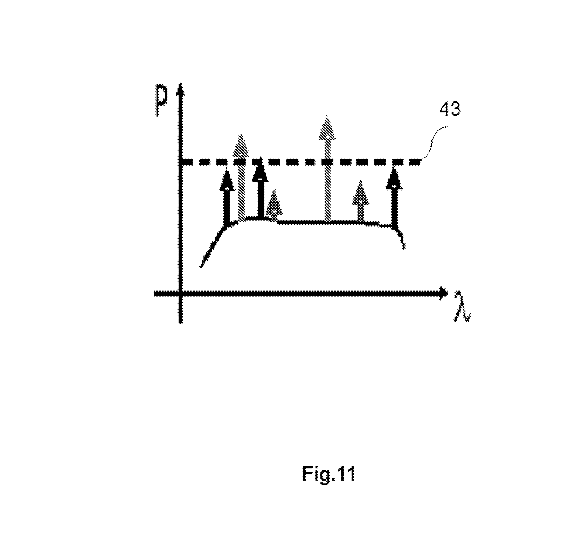

Regarding the power of the various received channels, the spectral analysis makes it possible to determine the differences in power between the channels and thereby determine the deviation from rated power 43 as depicted in Figure 11.

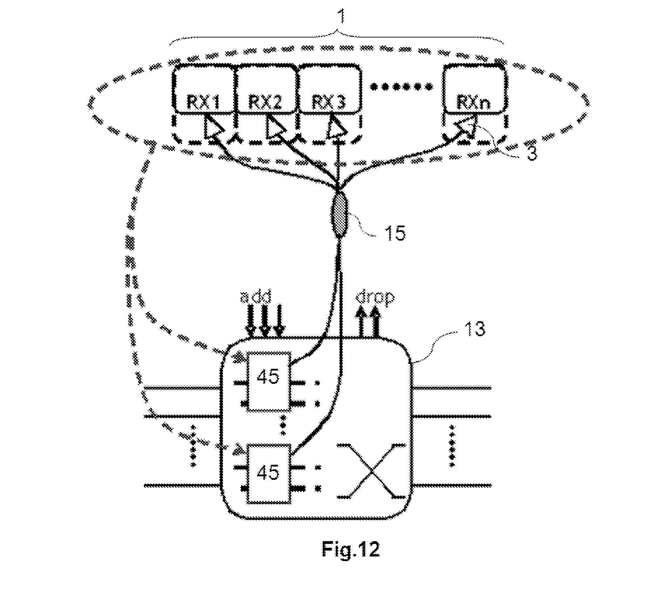

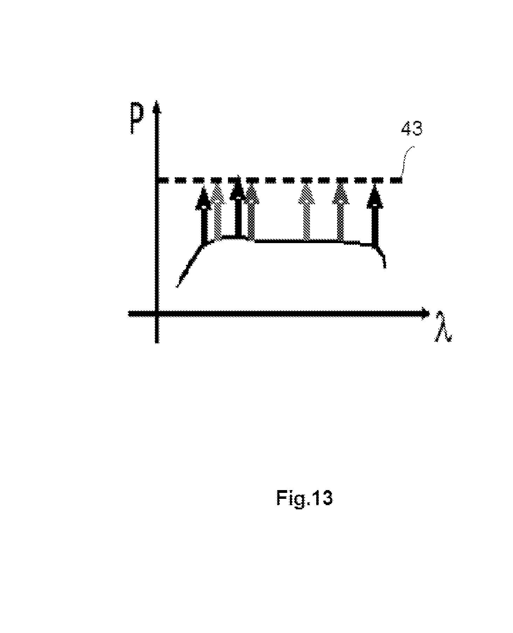

In order to equalize the power of the various channels to their rated value, an adjustment of the attenuation of each channel is applied optically by the wavelength selective switches 45 of the optical cross-connect 13 as described in Figure 12. The attenuation of the optical wavelength selective switches 45 is therefore modified based on the feedback provided by the spectral analysis. The power of the channels is then standardized across the rated power 43 as depicted in Figure 13.

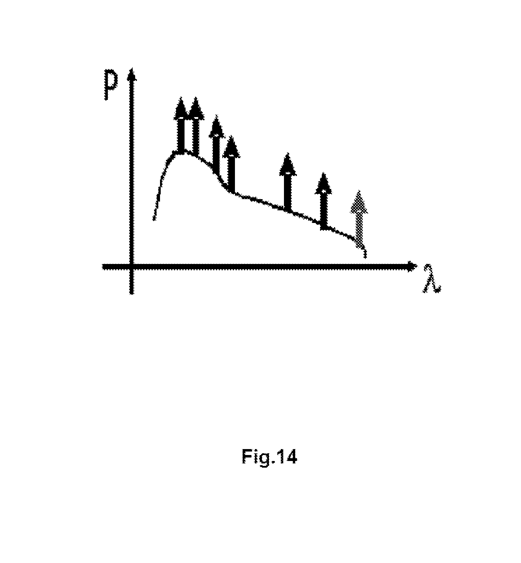

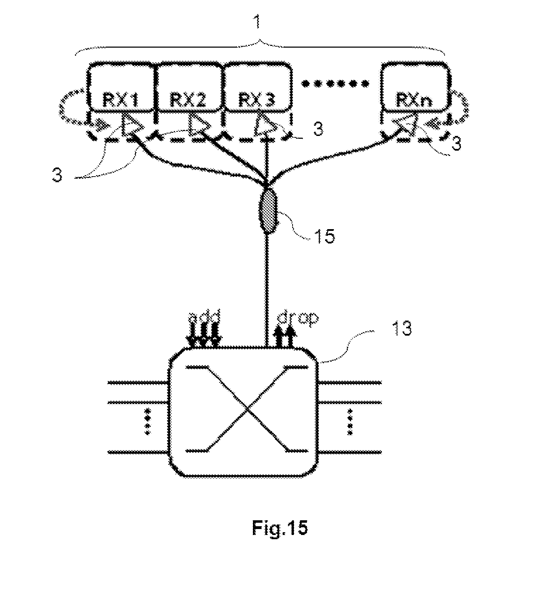

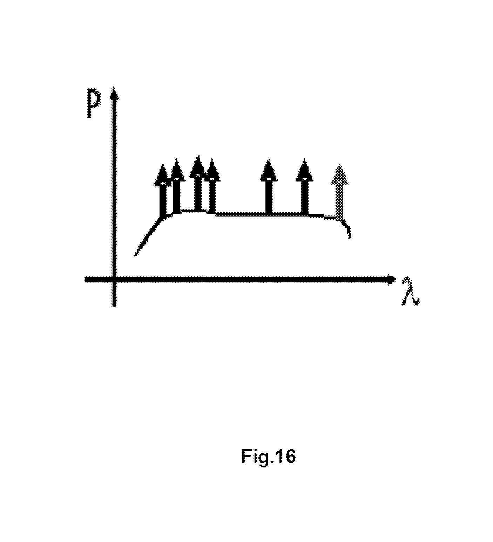

Furthermore, the spectral analysis may detect a tilt between the channels due to asymmetrical optical amplification. The signal power diagram is then tilted as depicted in Figure 14. In order to draw this power diagram, the gain curve of the optical amplifiers 3 located at the input of the optical receivers 1 is adjusted based on the feedback provided by the spectral analysis as described in Figure 15. Setting the optical amplifiers' gain makes it possible to draw the signals' power diagram (Figure 16).

Thus, by equalizing the power of all of the channels of the spectral band scanned during the spectral analysis by adjusting the attenuation of the optical wavelength selective switches and the gain of the optical amplifiers, the embodiments of the present invention make it possible to meet the conditions related to the power equilibrium of the channels in order to enable effective digital signal processing.

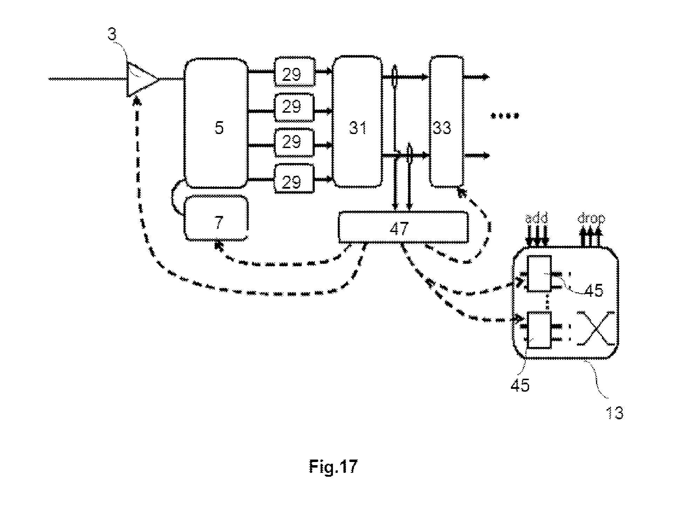

Figure 17 describes an example embodiment of the spectral analysis function 47. The spectral analysis module (or function) 47 retrieves the digital signals derives from the signal reconstruction module 31. The information obtained through spectral analysis 47 causes command signals to be sent to:

- the optical amplifier 3 in order to correct its gain curve,

- the local oscillator 7 to indicate to it which frequency to tune to,
- the optical wavelength selective switches 45 in order to adjust the individual attenuation of the channels,
- the finite impulse response filter of the chromatic dispersion compensation module 33 in order to adjust the filter's modulus.

Thus, the spectral analysis makes it possible to provide feedback to various devices in order to enable a more appropriate setting of these devices, making it possible to improve the signal retrieval performance, i.e. to reduce the losses of data transmitted over the network.

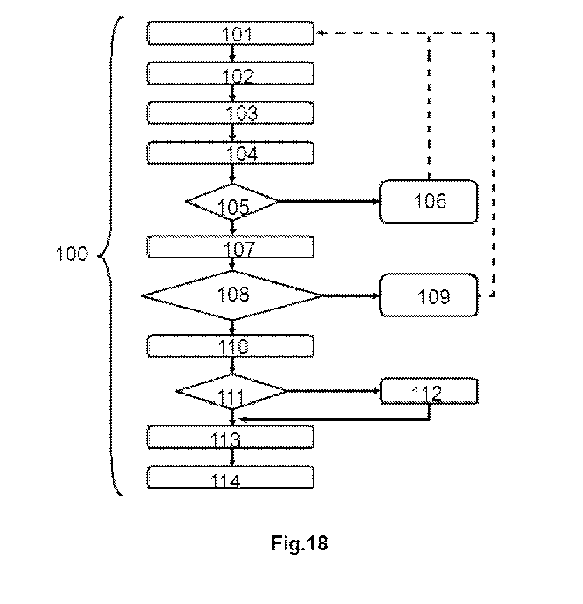

The various steps of an example embodiment of spectral analysis 100 when retrieving a signal within an optical receiver will now be described based on the synoptic diagram of Figure 18.

The first step 101 corresponds to the local oscillator 7 scanning the frequencies on the spectral range to be analyzed (corresponding to the spectral range covered by the transmission channels received within the optical receiver 1).

The second step 102 corresponds to the reconstruction of the spectrum corresponding to the scan.

The next step 103 is the wavelength division multiplexing (WDM) analysis that makes it possible to define the characteristics of the signals based on their wavelength (or frequency).

The step 104 is estimating the tilt of the amplification across the spectral range. The estimated value of this tilt is then compared to a predefined baseline value (for example 5 dB) (step 105) and if the tilt is greater than this value, then the gain function of the optical amplifier 3 at the input is modified to reestablish balance across the entire spectral range.

If the condition concerning the tilt (<5dB in this situation) is met, the power of each of the channels is determined (step 107) and compared to one another in order to determine the deviation from a rated power (step 108). If the deviation is greater than a predefined value, the settings of the wavelength selective switches 45 are modified to reduce the channels' deviation in power from the rated power.

If the condition of the deviation from rated power is met, then the frequency of the signals corresponding to a channel is determined (step 110) and compared to the tuning frequency of the local oscillator 7 (step 111). If this frequency is different, the local oscillator 7 is tuned to the frequency determined by the spectral analysis (112).

The step 113 corresponds to estimating the bandwidth of the signals corresponding to the analyzed channels. The modulus of the finite impulse response filter of the chromatic dispersion compensation 33 is then modified accordingly (step 114).

Additionally, it should be noted that the feedback loops connecting the steps 106 and 109 to the step 101 drawn as dotted lines correspond to one possible embodiment of the invention wherein after setting the gain of the optical amplifier 3 (step 106), a new scan is performed to verify that the new setting provides the desired correction. Likewise, after the optical wavelength selective switches 45 are set (step 109), a new scan will be performed for verification and if need be, adjustment. Nonetheless, in practice, the timespans available to conduct a spectral analysis are short, so that a single scan is carried out to adjust all of the dedicated devices' settings. A new scan may be conducted to check or refine the settings once all of them have been performed, i.e. after step 114.

Conducting a spectral analysis requiring the use of the local oscillator 7 in order to perform the scan requires that the receiver be inactive at the time of the analysis. Thus, according to one embodiment of the present invention, the spectral analysis is conducted when an optical receiver is being installed or when the receiver is not retrieving signals, for example when the network is being reconfigured or between two signal retrievals. Nonetheless, these inactivity times are shortened, particularly if the network is not oversized. Thus, the spectral analysis must be carried out quickly, which involves the use of devices that can scan in a minimal length of time (quickly tunable laser) while maximally reducing the number of scans.

Furthermore, as described above, the spectral analysis is performed along the entire spectral width corresponding to the channels received by the optical receivers 1 of the egress node. Thus, a spectral analysis conducted by one of these optical receivers 1, for example the receiver RX2 of Figure 2, makes it possible to analyze the signals retrieved by the node's other receivers (RX1, RX3...RXn) and therefore makes it possible to define the settings corresponding to the devices (optical amplifier, chromatic dispersion filter, etc.) of all of the nodes' receivers 1. Thus, whenever one of the node's receivers 1 is inactive, it may conduct a spectral analysis that will make it possible to adjust the settings of all of the node's receivers 1.

Adding a spectral analysis function to the digital signal processing conducted by the optical receivers of colorless optical communication networks therefore, makes it possible, for nearly no cost because it involves digital processing using an existing device, to improve the quality of signal retrieval, i.e. reducing the information losses over the network. Thus, the overall performance of the network is improved without adding new devices, i.e. without new investments.

## Claims

1. A method for retrieving at least one optical signal transmitted over a communication network by a transmission channel, said method using coherent detection and comprising the following steps

  - a coherent mixing of at least one transmitted optical signal and a baseline signal emitted by at least one frequency-tunable local oscillator (7),
  - a sampling of the signals derived from the coherent mixing, comprising an analog-digital conversion,
  - a digital signal processing,

  wherein the digital signal processing comprises a spectrum analysis function (47), and wherein the spectral analysis is conducted on a set of signals corresponding to a plurality of transmission channels.

2. A retrieval method according to claim 1, wherein the step of digital signal processing comprises a chromatic dispersion compensation function (33) using a finite impulse response filter, and wherein the spectral analysis makes it possible to determine the finite impulse response filter's transfer function in order to refine the filtering of the signal.

3. A retrieval method according to claim 1 or 2, wherein said method comprises a preliminary step of optical amplification, wherein the spectral analysis takes it possible to correct and/or refine said optical amplification's gain curve.

4. A retrieval method according to one of the preceding claims, wherein said method comprises a preliminary step of selecting at least one transmission channel of the network carried out by at least one wavelength selective switch (45), and wherein the spectral analysis makes it possible to determine the filtering function of said at least one wavelength selective switch (45) in order to adjust the attenuation corresponding to said at least one transmission channel.

5. A retrieval method according to one of the preceding claims, wherein the spectral analysis makes it possible to determine the wavelength of the transmission channel(s) over which the optical signal(s) is/are being transmitted, and consequently to determine the wavelength to which the tunable local oscillator (s) (7) must tune.

6. A retrieval method according to one of the preceding claims, wherein the spectral analysis is conducted via the tunable local oscillator (7) scanning the frequency spectrum corresponding to the spectral range of the analyzed set of signals.

7. A retrieval method according to one of the preceding claims, wherein the spectral analysis comprises the following steps:

  - a scan of the frequencies by the tunable local oscillator (7);
- a reconstruction of the spectrum;
- an analysis of the wavelength division multiplexing;
- an estimate of the tilt of the optical amplification;
- a determination of the power tilt between the various transmission channels;
- a determination of the frequency of the transmission channels;
- an estimate of the bandwidth of the various channels.

8. A retrieval method according to claim 7, wherein:

- the gain of at least one optical amplifier (3) is corrected based on the estimate of the tilt in the optical amplification;
- the settings of the wavelength selective switch (es) (45) are modified as a function of the power tilt between the various transmission channels;
- the tunable local oscillator(s) (7) is/are tuned as a function of the determination of the frequency of the transmission channels.

9. A retrieval method according to one of the preceding claims, wherein the spectral analysis is conducted whenever an optical signal's retrieval device does not retrieve the signal transmitted over a communication network.

10. A device for retrieving at least one optical signal transmitted over a communication network, said device comprising:

- a coherent mixer (5) connected to a frequency-tunable local oscillator (7),
- a sampler (9) comprising analog-digital conversion means,
- a digital signal processing device (11),

wherein the digital signal processing device (11) comprises a spectrum analysis function (47).

11. A retrieval device according to claim 10 wherein the digital signal processing device comprises a chromatic dispersion compensation function (33) using a finite impulse response filter and means for determining the transfer function of said finite impulse response filter based on the result of the spectral analysis.

12. A retrieval device according to claim 10 or 11 wherein said device comprises at least one optical amplifier (3) and means for adjusting the gain curve of said optical amplifier(s) (3) based on the result of the spectral analysis.

13. A retrieval device according to one of the claims 10 to 12, wherein said device comprises at least one wavelength selective switch (45) in order to select at least one transmission channel and wherein said device comprises means for adjusting the filtering function of said wavelength selective switch(es) (45).

14. A retrieval device according to one of the claims 10 to 13 said device comprises means for tuning the tunable local oscillator(s) (7) based on the result of the spectral analysis.

15. A retrieval device according to one of the claims 10 to 14 wherein the retrieval device comprises a plurality of means for retrieving signals transmitted over a plurality of channels, the spectral analysis being conducted by one of these means of retrieval and making it possible to adjust the parameters of the plurality of means of retrieval.

Fig.1

**Fig.2**

FIG_3

Fig.4

**Fig.5**

Fig.6

Fig.7

Fig.8

Fig.9

Fig.10

Fig.11

Fig.12

Fig.13

Fig.14

Fig.15

Fig.16

Fig.17

EP 2 348 651 A1

Fig.18

25

Europäisches
Patentamt

European
Patent Office

Office européen
des brevets

# EUROPEAN SEARCH REPORT

Application Number

EP 11 15 1215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 253 730 A2 (AGILENT TECHNOLOGIES INC [US]) 30 October 2002 (2002-10-30) | 1,6,10 | INV. H04B10/148 H04B10/17 H04B10/158 H04J14/02 |
| Y | * abstract * <br> * paragraphs [0002] - [0003] * <br> * claim 1 * <br> * figure 1 * | 7,8 | |
| X | EP 1 387 505 A2 (AGILENT TECHNOLOGIES INC [US]) 4 February 2004 (2004-02-04) | 1,9,10 | |
| Y | * paragraph [0008] - paragraph [0009] * <br> * paragraph [0012] - paragraph [0013] * <br> * paragraph [0016] - paragraph [0021] * <br> * claim 11 * <br> * figures 2, 5, 7, 9 * | 2-5, 11-14 | |
| Y | US 2006/088318 A1 (BOHN MARC [DE] ET AL) 27 April 2006 (2006-04-27) <br> * paragraph [0065] * <br> * figure 4 * | 2,11 | |
| Y | US 2003/086139 A1 (WING SO JOHN LING [US] SO JOHN LING WING [US]) 8 May 2003 (2003-05-08) <br> * paragraph [0233] - paragraph [0241] * <br> * figures 25a-25c * | 3,7,8,12 | TECHNICAL FIELDS SEARCHED (IPC) <br> H04B <br> H04J |
| Y | DAVID MENASHE ET AL: "Optical Amplifiers for Modern Networks", TRANSPARENT OPTICAL NETWORKS, 2006 INTERNATIONAL CONFERENCE ON, IEEE, PI, 1 June 2006 (2006-06-01), pages 115-118, XP031018026, ISBN: 978-1-4244-0235-9 <br> * Paragraphe 2.4 * | 4,8,13 | |

-/--

The present search report has been drawn up for all claims

| Place of search | Date of completion of the search | Examiner |
|---|---|---|
| Munich | 9 May 2011 | Rolan Cisneros, E |

EPO FORM 1503 03.82 (P04C01)

Europäisches
Patentamt
European
Patent Office
Office européen
des brevets

# EUROPEAN SEARCH REPORT

Application Number

EP 11 15 1215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KAZOVSKY L G ET AL: "Modern coherent optical communications", LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21 May 2006 (2006-05-21), pages 1-2, XP031393917, ISBN: 978-1-55752-813-1 * Paragraphe 3. * | 5,8,14 | |
| A | JI P N ET AL: "Reconfigurable waveband cross-connect and its application in 112 Gb/s WDM system", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467910, ISBN: 978-1-4244-2606-5 * the whole document * | 4,8,13 | |

TECHNICAL FIELDS
SEARCHED      (IPC)

The present search report has been drawn up for all claims

| Place of search | Date of completion of the search | Examiner |
|---|---|---|
| Munich | 9 May 2011 | Rolan Cisneros, E |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.** EP 11 15 1215

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2011

| Patent document cited in search report | | Publication date | Patent family member(s) | | Publication date |
|---|---|---|---|---|---|
| EP 1253730 | A2 | 30-10-2002 | DE | 60207477 D1 | 29-12-2005 |
| | | | DE | 60207477 T2 | 03-08-2006 |
| | | | JP | 2003028723 A | 29-01-2003 |
| | | | US | 2003011777 A1 | 16-01-2003 |
| EP 1387505 | A2 | 04-02-2004 | JP | 2004069696 A | 04-03-2004 |
| | | | US | 2004022547 A1 | 05-02-2004 |
| US 2006088318 | A1 | 27-04-2006 | CA | 2501372 A1 | 22-04-2004 |
| | | | CN | 1689255 A | 26-10-2005 |
| | | | WO | 2004034611 A1 | 22-04-2004 |
| | | | DE | 10246723 A1 | 13-05-2004 |
| | | | EP | 1550247 A1 | 06-07-2005 |
| | | | US | 2005201757 A1 | 15-09-2005 |
| US 2003086139 | A1 | 08-05-2003 | NONE | | |

EPO FORM P0459

For more details about this annex : see Official Journal of the European Patent Office, No. 12/82